# EUROPEAN PATENT APPLICATION

(11) **EP 1 768 365 A2**
(43) Date of publication of application: **28.03.2007**
(21) Application number: 06120977.1
(22) Date of filing: 20.09.2006
(51) Int. Cl.: H04M 1/725, H04M 1/60

(54) **Multi-functional bluetooth headset**

(30) Priority: 23.09.2005 KR 20050088570
(71) Applicant: Samsung Electronics Co., Ltd., Suwon-si, Gyeonggi-Do (KR)
(72) Inventor: Park, Jong-Myung, Seoul (KR)
(74) Representative: Grünecker, Kinkeldey, Stockmair & Schwanhäusser Anwaltssozietät

(57) **Abstract**

Provided is multi-functional Bluetooth^{®} headset for performing short-range wireless communications with a portable terminal and transferring data with a PC. In the multi-functional Bluetooth^{®} headset, a body is formed into a shape, a speaker is installed at a position of the body, and a microphone is spaced from the speaker by a predetermined distance on the body. A USB connector is configured to be selectively extended from and retracted into the body, for electrically connecting to a USB port of the PC, for enabling data transfer between the portable terminal and the PC, when being extended.
The USB connector is configured to be used for charging the power supply of the headset with a voltage sensor, voltage converter and charging controller being involved.

## Description

The present invention relates generally to a Bluetooth^{®} headset for a portable wireless terminal, and in particular, to a multi-functional Bluetooth^{®} headset which performs voice communications with the portable wireless terminal and functions as a wireless adapter that is chargeable with Personal Computer (PC) power as well as capable of transferring data between the portable wireless terminal and a PC by connecting to the PC.

The development of the electronic and communications industry is a driving force behind the proliferation of portable terminals. In order to meet users' demands, the portable terminals are being developed toward multi-functions, small size and lightweight. Along with this trend, peripheral devices attached or added to the portable terminals are correspondingly under development. The peripheral devices include, but are not limited to, an attachable or built-in camera, a smart card as an auxiliary memory, an ear microphone installed to a portable terminal for communications, and a Bluetooth^{®} headset for wirelessly communicating with a terminal by a Bluetooth module provided in the terminal.

Bluetooth^{®} enabled portable terminals are equipped with a Bluetooth antenna module operating in the 2.4GHz band in addition to a main antenna device for communication. These terminals also have a Bluetooth^{®} module in a main board, for wireless short-range communication with a Bluetooth headset.

The Bluetooth^{®} headset was designed for hands-free use of the portable terminal. There is no a cable between the Bluetooth® headset and the terminal;, therefore, the use convenience of the terminal increases and the Bluetooth^{®} headset is simpler to carry than a general hands-free wired ear microphone. Compared to the Bluetooth^{®} headset used for voice communications, an adapter called "Bluetooth^{®} dongle" is required for wireless data communications between a terminal and a PC.

The Bluetooth^{®} headset, which primarily functions to conduct wireless voice communications with the terminal, requires a power supply adapter. Also it requires a data cable or a Bluetooth^{®} adapter for data communications with a PC.

The present invention is designed to substantially solve at least the above-mentioned problems and/or disadvantages and to provide at least the advantages set forth below. Accordingly, the object of the present invention is to provide a multi-functional Bluetooth^{®} headset having the dual functions of voice communications and data communications with a PC.

This object is solved by the subject matter of the independent claims.

Preferred embodiments are defined by the subject matter of the dependent claims.

An aspect of the present invention is to provide a multi-functional headset so configured as to obviate the need for an additional data cable or a Bluetooth® adapter.

A further aspect of the present invention is to provide a multi-functional Bluetooth^{®} headset so configured that its internal power supply can be charged using a PC.

Still another aspect of the present invention is to provide a multi-functional Bluetooth^{®} headset having a built-in Universal Serial Bus (USB) connector to be connected to the USB port of a PC, thereby obviating the use of an additional connector. The above objects are achieved by providing a multi-functional Bluetooth^{®} headset for performing short-range wireless communications with a portable terminal and transferring data with a PC.

According to one aspect of the present invention, in a multi-functional Bluetooth headset for performing short-range wireless communications with a portable terminal and transferring data with a PC, a body is formed into a predetermined shape, a speaker is installed at an appropriate position of the body, and a microphone is spaced from the speaker by a predetermined distance on the body. An ear hook is formed of a predetermined shape on the body, to be worn on the ear of a user. A USB connector is configured to be selectively extended from and retracted into the body, for electrically connecting to a USB port of the PC, for enabling data transfer between the portable terminal and the PC, when being extended.

According to another aspect of the present invention, in a multi-functional Bluetooth headset for performing short-range wireless communications with a portable terminal and transferring data with a PC, a USB connector is configured to be extended from and retracted into a body of a predetermined shape. A USB controller controls data transfer depending on whether the USB connector is connected to the PC. A sensing portion senses the connection between the USB connector and the PC. A controller controls the USB controller according to the sensing of the sensing portion, wirelessly transfers data and voice from and to the portable terminal via an RF transmitter/receiver, and at the same time, controls a microphone and a speaker via an audio processor.

It is preferred that the controller includes a Bluetooth chip set as a Bluetooth module and controls the USB controller for selective data transfer depending on whether the USB connector is connected to the PC.

It is also preferred that the use of the sensing portion enables the controller to actively control the USB controller. The sensing portion is provided with a voltage sensor for sensing a voltage applied to a Vbus line of the USB connector, when the USB connector is connected to the PC. The voltage sensor can be a known transistor.

Furthermore, the Bluetooth^{®} headset having a predetermined charger (charging circuit) can be charged using the USB connector. Since an additional charging adapter is not needed for charging the headset, the headset can be more conveniently used.

The present invention will become more apparent from the following detailed description when taken in conjunction with the accompanying drawings in which:
FIG. 1 is a perspective view illustrating a multi-functional Bluetooth^{®} headset according to the present invention;
FIG. 2 is a perspective view illustrating the multi-functional Bluetooth^{®} headset when a USB connector is pulled out according to the present invention; and
FIG. 3 is a block diagram illustrating the multi-functional Bluetooth^{®} headset according to the present invention.

A preferred embodiment of the present invention will be described herein below with reference to the accompanying drawings. In the following description, well-known functions or constructions are not described in detail since they would obscure the invention in unnecessary detail.

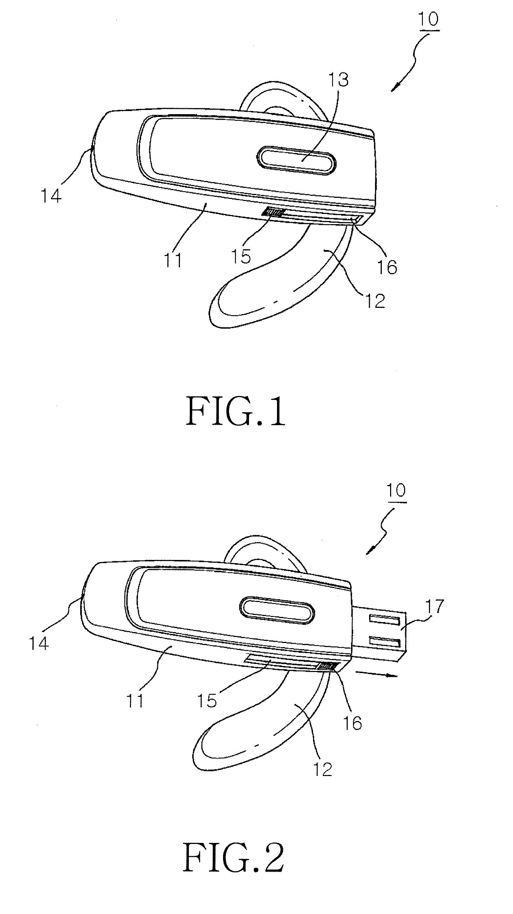

FIG. 1 is a perspective view illustrating a Bluetooth® headset according to the present invention and FIG. 2 is a perspective view illustrating the Bluetooth headset when a USB connector is pulled out.

Referring to FIGs. 1 and 2, a Bluetooth^{®} headset 10 according to the present invention is used as a wireless adapter for data transfer by connecting to a USB port of a electronic equipment such as a PC as well as for voice communication with a portable communication terminal.

The Bluetooth headset 10 has a body 11 of a predetermined shape and an ear hook 12 protruded in a predetermined shape from the body 11 to be worn on the ear of a user. A speaker (not shown) is installed toward the ear hook 12 and a microphone 14 is spaced from the speaker by a predetermined distance. Preferably, the ear hook 12 is curved and formed of a rubber material having an insert-molded wire therein.

A guide slit 16 of a predetermined length is formed on a side of the body 11. The guide slit 16 is provided with a predetermined slide button 15 which can move along the length of the body 11. Therefore, a USB connector 17 is extended from or retracted into the body 11 depending on the movement of the slide button 15, as illustrated in FIG. 2.

That is, while FIG. 1 illustrates the state where the Bluetooth headset 10 is used for voice communications with a portable terminal, FIG. 2 illustrates the state where the Bluetooth headset 10 is used as a wireless adapter by extending the USB connector 17 to a predetermined length from the body 11.

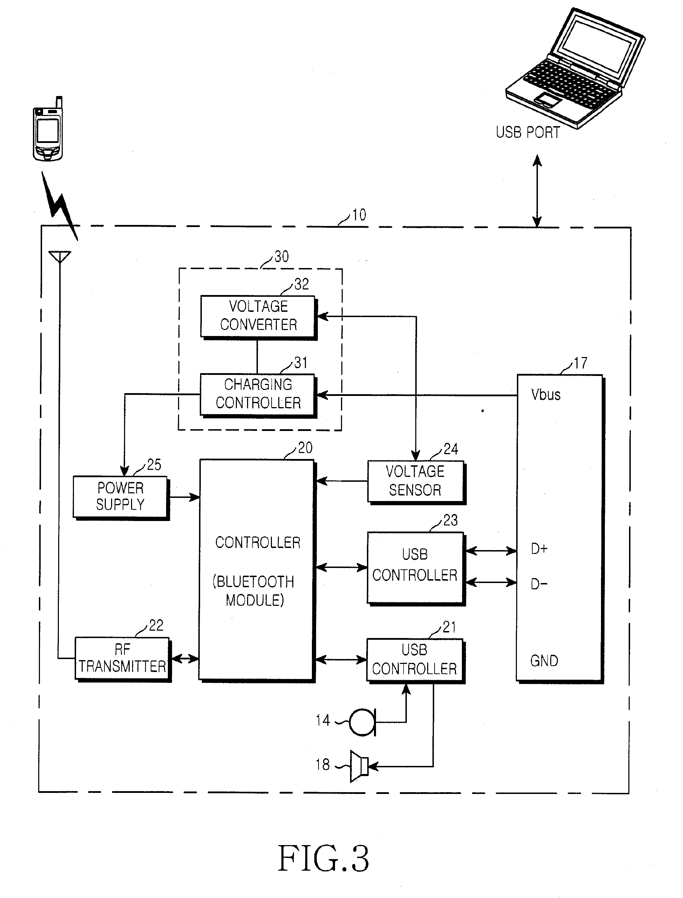

FIG. 3 is a block diagram illustrating the multi-functional Bluetooth^{®} headset according to the present invention. Referring to FIG. 3, the multi-functional Bluetooth^{®} headset 10 includes a controller 20, which controls a USB controller 23 as well as implements known Bluetooth^{®} communications with the portable terminal. The controller includes a Bluetooth^{®} module. The controller 20 also performs short-range wireless communications with the portable terminal via a Radio Frequency (RF) transmitter/receiver 22.

An audio processor 21 connected to the controller 20, and the microphone 14 and a speaker 18 connected to the audio processor 21 form a voice input/output block used to conduct a call. The audio processor 21 converts Pulse Code Modulation (PCM) data received from the controller 20 to an analog voice signal and outputs the voice signal through the speaker 18. It also converts a voice signal received form the microphone 14 to PCM data and provides the PCM data to the controller 20.

The USB controller 23 serves as a data transmitter/receiver for transmitting and receiving data via the USB connector 17 connected to a PC. The USB controller 23 preferably includes a device Identifier (ID) so that when it is connected to the PC, a device driver corresponding to the device ID operates it.

In accordance with the present invention, a sensing portion is further provided to sense a connection between the USB connector 17 and the PC so that the controller 20 switches the Bluetooth® headset 10 to a wireless adaptor mode for the PC. The sensing portion may include a voltage sensor 24. The voltage sensor 24 is connected to a voltage converter 32 of a charger 30 for sensing application of a voltage. Or, the voltage sensor 24 may be connected to a Vbus line being a power terminal of the USB connector 17 sensing application of a voltage. A known transistor can implement the voltage sensor 24. Yet, the voltage sensor 24 is not limited to a transistor and thus can be any other sensing device. Furthermore, while not shown, a mechanical sensing portion can be used to sense extension of the USB connector 17 triggered by the movement of the slide button 15 in the body 11, and thus to switch the Bluetooth® headset 10 to the wireless adapter mode.

The Bluetooth^{®} headset 10 includes a charger 30. The USB connector 17 has two data transmission lines D+ and D- connected to the USB controller 23 equipped with the data transmission function, a ground terminal GND, and the Vbus line for supplying power to a power supply 25 of the Bluetooth headset 10 via the charger 30.

The charger 30 has a charging controller 31 for stabilizing power applied from the PC enough to be supplied to the power supplier 25 by checking the state of the power and a voltage converter 32 with a predetermined switch (not shown), for stabilizing the power applied from the PC under the control of the charging controller 31 and providing the stabilized power to the power supplier 25 by the switch. The power supply 25 can be a chargeable battery or any other known battery pack.

Regarding the operation of the charger 30, when the USB connector 17 is extended from the body and connected to the PC, the charging controller 31 determines whether power from the PC has been stabilized. If the power is not stable, the charging controller 31 switches the switch of the voltage converter 32 to block the power from being provided to the power supply 25. A known n-MOS transistor can be used as the switch.

Alternatively, when the power is stable, the voltage converter 32 provides the PC power to the power supply 25. After charging the power supply 25, it discontinues power supply to the headset 10 upon completion of charging.

In accordance with the present invention as described above, the Bluetooth headset performs voice communications with the portable terminal and functions as a wireless adapter for data transfer by directly connecting the USB connector to the PC, as well. Therefore, there is no need for using an additional data cable or adaptor and the convenience of use of the Bluetooth® headset is increased.

While the invention has been shown and described with reference to certain preferred embodiments thereof, it will be understood by those skilled in the art that various changes in form and details may be made therein without departing from the scope of the invention as defined by the appended claims.

## Claims

1. A multi-functional Bluetooth^{®} headset for performing short-range wireless communications with a portable communication terminal and transferring data with a electronic equipment, comprising:
a body; and
a USB connector configured to be selectively extended from and retracted into the body, for electrically connecting to a USB port of the electronic equipment, for enabling data transfer between the portable terminal and the electronic equipment.

2. The multi-functional Bluetooth^{®} headset of claim 1, wherein the body comprises a guide slit of a predetermined length having a slide button, the slide button being movable lengthwise for controlling the USB connector to be extended from or retracted into the body.

3. The multi-functional Bluetooth^{®} headset of claim 1, further comprising a sensing portion for sensing the connection between the USB connector and the electronic equipment.

4. The multi-functional Bluetooth^{®} headset of claim 1, wherein said electronic equipment is a PC, and wherein the multi-functional Bluetooth^{®} headset comprises:
a speaker installed at a position of the body;
a microphone spaced from the speaker by a distance on the body; and
an ear hook on the body, to be worn on the ear of a user.

5. The multi-functional Bluetooth^{®} headset of claim 4, wherein the body comprises a guide slit of a predetermined length having a slide button, the slide button being movable lengthwise so that the USB connector is extended from or retracted into the body to a predetermined length.

6. A multi-functional Bluetooth^{®} headset for performing short-range wireless communications with a portable terminal and transferring data with a electronic equipment, comprising:
a USB connector configured to be extended from and retracted into a body of a the headset;
a USB controller for controlling data transfer depending on whether the USB connector is connected to the electronic equipment;
a sensing portion for sensing the connection between the USB connector and the electronic equipment; and
a controller for controlling the USB controller according to the sensing of the sensing portion, wirelessly transferring data and voice from and to the portable terminal via a RF transmitter/receiver, and at the same time, controlling a microphone and a speaker via an audio processor.

7. The multi-functional Bluetooth^{®} headset of claim 6, wherein the sensing portion senses a voltage applied from the electronic equipment.

8. The multi-functional Bluetooth^{®} headset of claim 6 or 7, further comprising a charger for receiving power from the electronic equipment and supplying voltage to a power supply of the multi-functional Bluetooth headset, thereby charging the power supply.

9. The multi-functional Bluetooth^{®} headset of claim 8, wherein the charger comprises:
a charging controller for stabilizing power applied from the electronic equipment via the USB connector to the power supply by checking the state of the power; and
a voltage converter for stabilizing the power applied from the electronic equipment under the control of the charging controller and providing the stabilized power to the power supply.

10. The multi-functional Bluetooth^{®} headset of claim 9, wherein the charging controller switches the Bluetooth headset to a Bluetooth headset mode or a electronic equipment Bluetooth adapter mode according to whether the USB connector is connected to a USB port of the electronic equipment.

11. The multi-functional Bluetooth^{®} headset of claims 6 to 10, wherein said electronic equipment is a PC.

12. The multi-functional Bluetooth^{®} headset of claim 11, wherein the sensing portion senses a voltage applied from the PC, when the USB connector is connected to the PC.

13. The multi-functional Bluetooth^{®} headset of claim 11 or 12, further comprising a charger for, when the USB connector is connected to the PC, receiving power from the PC and supplying voltage to a power supply of the multi-functional Bluetooth headset, thereby charging the power supply.

14. The multi-functional Bluetooth^{®} headset of claim 13, wherein the charger comprises:
a charging controller for stabilizing power applied from the PC via the USB connector to the power supply by checking the state of the power; and
a voltage converter having a predetermined switch, for stabilizing the power applied from the PC under the control of the charging controller and providing the stabilized power to the power supply by the switch.

15. The multi-functional Bluetooth^{®} headset of claim 14, wherein the charging controller automatically switches the Bluetooth headset to a Bluetooth headset mode or a PC Bluetooth adapter according to whether the USB connector is connected to a USB port of the PC.
